# EUROPEAN PATENT APPLICATION

(11) **EP 2 415 578 A1**
(43) Date of publication of application: **08.02.2012**
(21) Application number: 10758649.7
(22) Date of filing: 29.03.2010
(51) Int. Cl.: B29C 39/24, B29C 39/44, G02B 3/00, B29L 11/00

(54) **PLASTIC LENS MANUFACTURING DEVICE**

(30) Priority: 31.03.2009 JP 2009088044; 31.03.2009 JP 2009088045
(71) Applicant: Hoya Corporation, Tokyo 161-8525 (JP)
(72) Inventor: HAYAKAWA Yoshitaka, Tokyo 161-8525 (JP); OKAMOTO Yasuhisa, Tokyo 161-8525 (JP)
(74) Representative: Betten & Resch
(86) International application number: PCT/JP2010/055575
(87) International publication number: WO 2010/113878

(57) **Abstract**

A plastic lens manufacturing device includes a preparation tank in which a lens material is prepared; a suction unit which exhausts a gas in the preparation tank; a thermometer which measures a temperature of the lens material that is prepared; a revolution indicator which measures the number of revolutions of a stirrer for stirring the lens material when the lens material is prepared; a control unit which determines abnormality of a preparation state based on data obtained from the thermometer and revolution indicator; a temperature regulation unit which regulates a temperature inside the preparation tank; an inhibitor introduction unit which introduces a reaction inhibitor into the preparation tank; and a programmable logic controller which is connected to the control unit and controls operations of the temperature regulation unit and the inhibitor introduction unit based on determination made by the control unit.

## Description

### Technical Field

The present invention relates to a plastic lens manufacturing device which is suitable tor use in a plastic lens material preparation step.

### Background Art

Various developments have been made in lens materials having a high refractive index to produce a thinner and lighter lens. For example, it is reported that a resin obtained by polymerization in which sulfur having a high polarizability is introduced has a high refractive index of 1.7 or greater.

In general, however, the higher the refractive index is, the lower the transparency is. Thus, it is necessary to secure the transparency along with the increase in the refractive index of the lens material.
Hence, Reference Document 1 described below proposes a technology in which a uniform polymerization reaction is promoted by keeping a temperature in an initial polymerization at a low level within a certain range, whereby occurrence of optical distortion is inhibited.
Furthermore, Reference Document 2 proposes a method for producing a high refractive index material having a high transparency in which a composition for a resin has previously been subjected to a degassing treatment.

With the resin containing sulfur as described above, a high retractive index can be attained while maintaining a relatively high Abbe number, however the resin has drawbacks in workability because odor components such as hydrogen sulfide are generated during a molding process.
Hence, Reference Document 2 discloses a method for detecting a degree of proceeding of a reaction by checking a degree of the progress of degassing of the composition for resin through the use of a refractometer.
Further, Reference Document 3 proposes that the amounts of such odor components are reduced by subjecting a polymerizable compound having sulfur to a pressure reducing treatment for a certain period of time.

In addition, Reference Document 4 discloses that a composition for resin in which an inorganic compound having sulfur or a selenium atom is used, is subjected to a degassing treatment to remove dissolved gas such as hydrogen sulfide, thereby improving the transparency as an optical material.

### (Prior Art Technical Documents)

### Patent Documents

Patent Document 1: Japanese Patent Laid-Open Publication No. 2004 209968
Patent Document 2: Japanese Patent Laid-Open Publication No. 2004-137481
Patent Document 3: Japanese Patent Laid-Open Publication No. 2001-172388
Patent Document 4: Japanese Patent Lard-Open Publication No. 2006-348289

### Disclosure of the Invention

### (Problems to be Solved by the Invention)

As described above, when a lens material containing sulfur is prepared, odorous gas such as hydrogen sulfate may possibly be generated in the course of the reaction. Hence, it is required to securely discard or dispose of such gas in a plastic lens manufacturing device and a production step thereof.
Further, strict control is required by applying a system which prevents the leakage of the exhaust gas to the outside in consideration of the contamination of the environment and which prevents the generation of undesirable gases beyond the exhaust ability.

Patent Document 1 discloses a lens manufacturing device which has a temperature regulator regulating the temperature of a liquid raw material in a raw material storage container and a sensor detecting a temperature of the raw material, and which includes a means for sounding an alarm when the temperature exceeds a certain degree. When the alarm is sounded, however, the handling of problems is left to the discretion of workers but a process for effectively dealing with the problems is not established.
In addition, conditions in the raw material storage container are determined by the temperature of the raw material. Thus, changes such as leakage of undesirable gas or solidification of the raw material which do not involve the increase of the temperature, namely an unusual polymerization reaction may not be detected.

Further, although Patent Document 2 discloses that the degree of proceeding or the reaction is detected by measuring a viscosity, a specific gravity or a refractive index of a reactant, no disclosure is made about measures to be taken when abnormal conditions are encountered.
Currently, all of countermeasures to be taken when the abnormality occurred such as introduction of a polymerization reaction inhibitor are manually taken, and continuous monitoring by workers is required. In addition, when, for example, a lens material having a high refractive index lens is prepared as described above, an introduction operation of cooling water, an inhibitor, or a cooling water and an inhibitor, has to be performed by workers paying attention to defending themselves against generated gas that places an enormous load on workers. Contrarily, in order to minimize a loss incurred at the time of occurrence of the abnormality, quicker and more reliable handling of problems is required.

Moreover, as disclosed in Patent Document 3, when a degassing step is taken during or after the preparation stage of the polymerizable composition, odors generated at the time of a molding step or a cutting step taken after the polymerizable composition is cured can be eliminated to some extent. However, workers may be exposed to odors not only in those steps but also in other steps. For example, when abnormality in the preparation of the polymerizable composition occurs, the polymerization reaction inhibitor has to be manually introduced as described above. Thus, there is a danger that gas in a tank may leak out of the tank.

It is necessary, therefore, to shorten the duration of time in which workers are exposed to undesirable gases having an odor component as much as possible. Further, it is desirable to prevent the leakage of such odorous gases in terms of the contamination of the environment. Moreover, it is important to previously establish a system in which proper countermeasures are taken to minimize an amount of the leakage even if the leakage of such odorous gases occurs.

The present invention has been made in view of the problems described above. The present invention aims to reduce a burden placed on workers who are involved in the treatment of the unusual polymerization reaction occurs when preparing raw materials in the production of plastic lenses; cake reliable countermeasures against abnormality occurs in the preparation stage; and inhibit the leakage and diffusion of undesirable gases such as odorous gases.

### (Means for Solving the Problem)

In order to solve the above-discussed problems, the plastic lens manufacturing device according to the present invention includes a preparation tank in which a lens material is prepared, a suction unit which exhausts a gas in the preparation tank, a thermometer which measures a temperature of the lens material that is prepared, and a revolution indicator which measures a number of revolutions of a stirrer for stirring the lens material when the lens material is prepared. The plastic lens manufacturing device also includes a control unit which determines an occurrence of abnormality in a state of the preparation of the lens material based on data obtained from the thermometer and the revolution indicator, a temperature regulation unit which regulates a temperature inside the preparation tank, and an inhibitor introduction unit which introduces a reaction inhibitor into the preparation tank. The plastic lens manufacturing device further includes a programmable logic controller which is connected to the control unit and controls operations of the temperature regulation unit and the inhibitor introduction unit based on determination made by the control unit.

The plastic lens manufacturing device according to the present invention monitors conditions of the preparation based on the temperature of the lens material and the number of revolutions of the stirrer which reflects the viscosity of the lens material. A state of solidification of the lens material, which cannot be monitored based on the temperature alone, can also be monitored by measuring the number of revolutions of the stirrer, thereby grasping the viscosity of the lens material.
When the values measured by the thermometer and the revolution indicator are beyond the control values, the temperature regulation unit which is operated by a programmable logic controller (PLC) cools the preparation tank, and a proceeding of an abnormal reaction is inhibited by introducing the reaction inhibitor through the inhibitor introduction unit. Thus, countermeasures against the abnormality occurs in the preparation can be taken at all times even without involving an operation performed by workers,
In addition, there is no need for workers to directly open and close the preparation tank when the abnormality occurs, and the leakage of undesirable gases generated at the time of opening or closing the tank and the diffusion thereof to surrounding areas can be inhibited. Accordingly, workers can avoid being exposed to such undesirable gases. As a result, workers can easily take a lens material preparation step without causing the leakage of odorous gases.

Furthermore, it is preferable to hermetically close at least the periphery of the preparation tank by the housing and reduce a pressure in the housing by exhausting an atmosphere therein by using a second suction unit. With this arrangement, even if undesirable gases which are generated at the time of the preparation of the lens material leak from the preparation tank, the diffusion thereof to surrounding areas can be inhibited.

According to the plastic lens manufacturing device according to the present invention, the degree of the proceeding of the reaction can be more reliably monitored at the time of the preparation of the lens raw material with the refractometer which measures the refractive index of the lens material in the preparation tank.
Furthermore, when the device includes a pressure gauge which measures a pressure in the preparation tank, conditions of the preparation can also be monitored based on gases generated in the course of the preparation of the lens material and expansion of the lens material.

In addition, it is preferable that the control unit is configured to determine whether or not obtained data are within pre determined control values at least in a pre-determined step in accordance with a lapse of a preparation time of the lens material. With this arrangement, it becomes possible to optimally control each step. Further, control procedures can be simplified by omitting unnecessary monitoring operations.

An example of a step in accordance with the lapse of the preparation time may include a stirring step taken after the introduction of the lens material, a cooling step, a degassing step, and the like. In the case of the preparation in which a reaction is caused, the reaction step is included and the control value may be set at least in any one of these steps.

Furthermore, it is preferable that the control unit is configured to output an abnormal signal to a PLC when at least one of obtained data exceeds a range of the control values, whereby abnormality occurs in the preparation step can be more precisely detected and countermeasures against problems can promptly be taken.

### (Effect of the Invention)

According to the present invention, cooling operation of the preparation tank, the introduction operation of the inhibitor or both operations is/are performed immediately after the abnormality in the preparation tank is detected. Accordingly, countermeasures against the unusual polymerization reaction of the lens material can quickly be taken.
Further, because workers do not need to directly open and close the preparation tank when the abnormality occurs, the lens material can be prepared without causing the leakage of odorous gases.

### Brief Description of the Drawings

Fig. 1 is a schematic perspective view showing a plastic lens manufacturing device according to an embodiment of the present invention.
Fig. 2 is an explanatory view showing a window provided on a housing in a plastic lens manufacturing device according to an embodiment of the present invention.
Fig. 3 is a schematic perspective view illustrating a housing which hermetically closes a preparation tank in a plastic lens manufacturing device according to an embodiment of the present invention.
Fig. 4 is a block diagram showing a construction of a plastic lens manufacturing device according to an embodiment of the present invention.
Fig. 5 is a flow chart showing a plastic lens material preparation step taken by a plastic lens manufacturing device according to an embodiment of the present invention,
Fig. 6 is a flow chart showing a reaction step in a plastic lens material preparation step taken by a plastic lens manufacturing device according to an embodiment of the present invention,
Fig. 7 is a flow chart showing a degassing step in a plastic lens material preparation step taken by a plastic lens manufacturing device according to an embodiment of the present invention.

### Description of the Preferred Embodiment

### 1. Embodiment of Plastic Lens Manufacturing Device

### (1) Structure of Plastic Lens Manufacturing Device

Fig, 1 is a schematic perspective view showing a plastic lens manufacturing device 100 according to the present embodiment. The plastic lens manufacturing device 100 according to the present embodiment includes a refractometer 2 which measures a refractive index of a material in a preparation tank 1 in which a lens material is prepared, and a revolution indicator 3 which measures the number of revolutions of a stirrer which stirs the lens material in the preparation tank 1.
The plastic lens manufacturing device 100 according to the present embodiment further includes a thermometer 4 which measures a temperature of the lens material in the preparation tank 1, a pressure gauge 5 which measure a pressure in the preparation tank 1, and a temperature regulation unit 16 which regulates a temperature in the preparation tank 1.

Any type of refractometer, revolution indicator, thermometer, pressure gage can be employed for the refractometer 2, the revolution indicator 3, the thermometer 4 and the pressure gauge 5, respectively so long as accurate data required for determining conditions of a preparation step can be obtained therefrom. In particular, with respect to the refractometer 2, a so-called in-line refractometer with which the refractive index is directly measured in the tank may be used instead of a refractometer with which the material has to be taken out for measurement.

Moreover, the plastic lens manufacturing device 100 according to the present embodiment also includes an alarm 6 which sounds an alarm when abnormality in conditions of the preparation occurs in the preparation tank 1, an inhibitor introduction unit 12a which introduces a reaction inhibitor at the time when the abnormality in conditions of the preparation occurs, and a cooling water introduction unit 12b which directly introduces cooling water into the tank. The device further includes a display unit 13 which displays data obtained from the refractometer 2, the revolution indicator 3, the thermometer 4 and the pressure gauge 5, a control unit 14 which determines conditions of the preparation based on the data described above, for example a PC (Personal Computer), and a PLC 8 which controls the handling when the abnormality occurs. The control unit 14 is not limited to the PC, and any unit capable of determining the content of the control based on measured values and outputting a signal to the PCL 8 may be used. A measurement controller or the like having such a function may also be used.

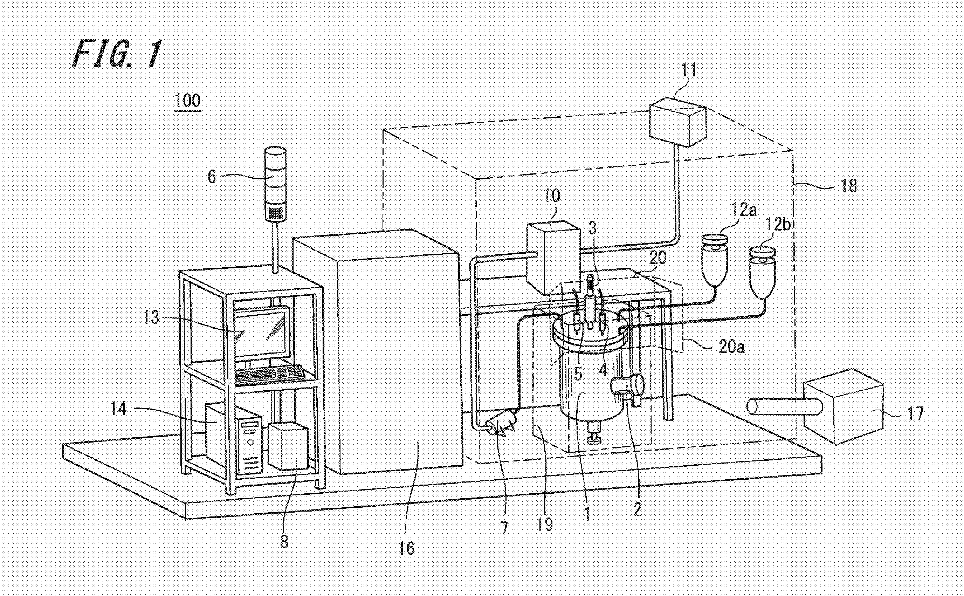

Here, for example, the preparation tank 1, the refractometer 2, the revolution indicator 3, the thermometer 4 and the pressure gauge 5 are located inside a housing 18 which is hermetically closed. It should be noted that although the housing 18 is not necessarily transparent, the housing may be made up of transparent panels such as glass. In particular, it is preferable that the housing and the panels are made up of a material having durability against the generated gas which may leak. In Fig. 1, in order to clearly show the structure of the inside of the housing 18, the outline of the housing 18 is indicated by a two-dot chain line.
Further, in the housing 18, a first suction unit 7 which removes gases from the preparation tank 1, and a purifying tank 10 which purifies undesirable gases such as odorous gases suctioned through the first suction unit 7 are provided. To the housing 18, a second suction unit 17 which suctions an atmosphere inside the housing 18 for exhausting it outside is connected.
Here, an exhaust unit 11 which exhausts the gas purified through the purifying tank 10 is provided, for example, outside the housing 18.
Further, the temperature regulation unit 16 is located outside the housing 18 in Fig. 1, but it may be located inside the housing 18.

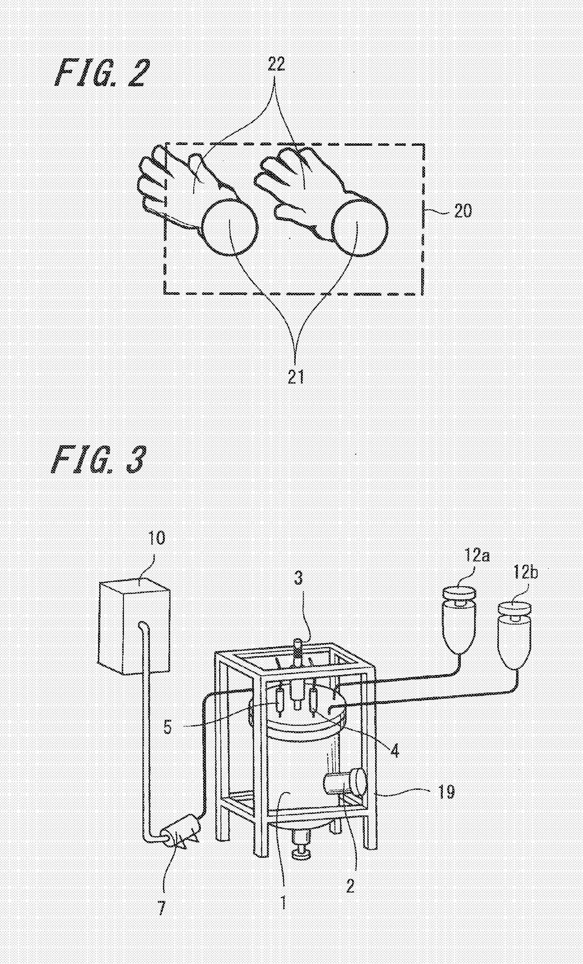

As shown in Fig. 1, a window 20 which is openable and closable is provided to the housing 18, and when an operation sich as the introduction of the material or the checking of the units is required, the window is opened and the operation is performed.
The window 20 may be openable to outside air by providing a door 20a. Further, as shown in Fig. 2, which is a schematic perspective view, an insertion hole 21 into which a hand of a worker is inserted, and an airtight glove 22 which is connected to the insertion hole 21 may be provided, whereby the operation such as the introduction of the material and the checking of units can be carried out while the inside of the housing 18 is kept airtight. Thus, the exposure of workers to the odorous gas can be securely prevented.

Moreover, as shown in Fig. 3, the preparation tank 1 may include a housing 19 which has a shape covering the preparation tank 1 so as to air-tightly close it. In this case, the leakage of odorous gases and the like can be more reliably inhibited.

It should be noted that when the odorous gas is heavier than air such as hydrogen sulfide, the leaked gas is likely to accumulate at lower places. Accordingly, as shown in Fig. 1, the second suction unit 17 may preferably be connected to a lower part of the housing 18, for example, in the vicinity of a floor because such gas heavier than air can be efficiently auctioned.

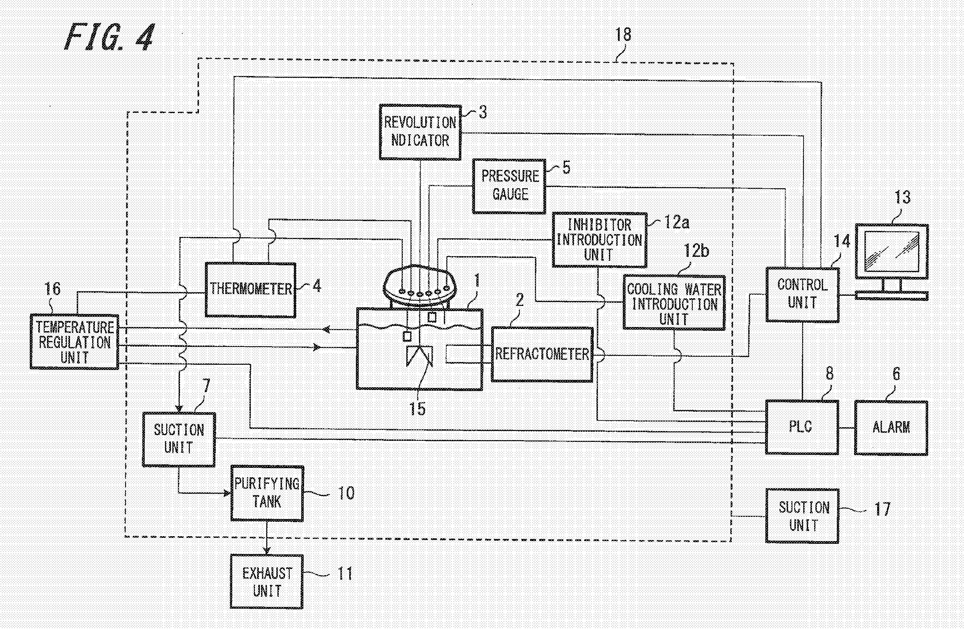

Fig. 4 is a block diagram showing a construction of the plastic lens manufacturing device 100 according to the present embodiment. The refractometer 2 is directly attached to the preparation tank 1. It measures refractive indexes of the lens material which is prepared and thus obtained data are sent to the control unit 14.
A stirrer 15 which stirs the lens material in the preparation tank 1 revolves at a certain torque, and stirs the lens material to be prepared. The stirrer 15 is connected to the revolution indicator 3 and sends information about the measured number of revolutions to the control unit 14. the control unit 14 determines the viscosity of the lens material based on the number of revolutions,

The thermometer 4 measures the temperature of the lens material in the preparation tank 1 by using, tor example, a thermocouple, and thus obtained data are sent to the control unit 14. The temperature regulation unit 16 controls a temperature based on an input signal from PCL 8.
The pressure gauge 5 measures a change in gas pressure in the preparation tank 1, which is caused by gas generated by abnormality occurred in the preparation and expansion and shrinking of the lens material. The data thus obtained are sent to the control unit 14. The data from the refractometer 2, the revolution indicator 3, the thermometer 4 and the pressure gauge 5 are displayed online on the display unit 13 through the control unit 14, As a result, workers can visually check conditions of the preparation and easily grasp the proceeding of the reaction. Moreover, workers can remotely monitor conditions of the preparation of the lens material when the display unit 13 is placed in a desired location.

Moreover, it is preferable that the data is highlighted when the control unit 14 determines the occurrence of abnormality in conditions of the preparation. For example, a different color may be applied to data that indicate an occurrence of abnormality. The data may blink, may be magnified or may be displayed in any appropriate manner. In addition to highlighting the data, the whole display may be highlighted, or the data may be highlighted by a symbol showing the occurrence of the abnormality. Further, the data showing the occurrence of the abnormality may be kept in the display screen in addition to the data displayed online.

The first suction unit 7 suctions the odorous gas generated in the preparation tank, such as hydrogen sulfide, and sends it to the purifying tank 10. The purifying tank 10 contains a material having a purifying effect, such as an alkaline aqueous solution in a case of hydrogen sulfide, and purifies the suctioned gas by applying a gas-liquid contact method in which gas is passed through the alkaline aqueous solution,

The second suction unit 17 is connected to the housing 18 and applies suction to reduce pressure in the housing 18 when the preparation tank 1 is operated. This enables the pressure in the housing 18 to always be maintained lower than that of the ambient air. As a result, even if odorous gases leak when opening or closing the preparation tank 1, the outflow thereof from the housing 18 can be prevented. The housing 18 may include ventilation holes for adjusting the internal pressure. With the ventilation holes, the internal pressure of the housing 18 may not necessarily be reduced.

The control unit 14 determines whether or not the data obtained from che refractometer 2, the revolution indicator 3, the thermometer 4 and the pressure gauge 5 are within ranges of pre-determined control values, and sends operational commands as an abnormal signal to the PCL 8 when the obtained data are outside the ranges of the control values.
Subsequently, the PCL 8 having received the abnormal signal outputs operation signals to the temperature regulation unit 16, the inhibitor introduction unit 12a, the cooling water introduction unit 12b, and the alarm 6, whereby the temperature regulation unit 16 starts to cool the preparation tank 1 by circulating cooling water around the preparation tank, for example. Further, since the inhibitor introduction unit 12a directly introduces the reaction inhibitor into the preparation tank 1 under the control of the PCL 8, the proceeding of the abnormal reaction of the lens material in the preparation tank 1 can be inhibited. Cooling water may further be introduced into the preparation tank 1 from the cooling water introduction unit 12b if necessary depending on the material which is prepared.

As described above, according to the plastic lens manufacturing device 100 of the present embodiment, at the time of the preparation of the lens material, at least any one of the changes in the refractive index of the lens material, the number of revolutions of the stirrer, the temperature and the pressure is monitored. When the abnormality in the preparation occurs, the temperature regulation unit 16, the inhibitor introduction unit 12a, the cooling water introduction unit 12b, and the alarm 6 are operated by the PCL 8.
Hence, workers can deal with the abnormality without directly touching the apparatus. Thus, they are not required to keep on monitoring all of the lens material preparation steps, resulting in reduction of the burden on workers. If abnormality in the polymerization occurs at a moment when workers are absent or when they take turns, the time required until necessary countermeasures are taken can remarkably be reduced.

In particular, as the inhibitor introduction unit 12a and the cooling water introduction unit 12b are provided and they are controlled by the control unit 14 through the PCL 8, workers can avoid possibilities of being exposed to gas generated during the polymerization reaction. Because the inhibitor can be introduced promptly, the excessive proceeding of the polymerization reaction can surely be prevented.

Further, countermeasures against the abnormality can be taken by workers without directly opening the preparation tank 1. Thus, the leakage of undesirable odorous gases from the preparation tank 1 and the diffusion thereof can be prevented. The leakage of undesirable gases such as odorous gas can be inhibited even if the housing 18 is not provided. However, it is preferable that at least the preparation tank 1 is covered with the housing 18 and the internal pressure of the housing 18 is reduced by the second suction unit 17 because the diffusion of undesirable gases such as odorous gas to surrounding areas can be more securely prevented.
In this case, in particular, it is preferable that the insertion hole 21 into which worker's hand is inserted and the door 20a provided with the glove 22 which is hermetically closed and connected to the insertion hole 21 are provided because even if the preparation tank 1 is opened during the introduction of the material, the diffusion of undesirable odorous gases can be inhibited.

A gas detector which detects undesirable gas such as odorous gas may be connected to the second suction unit 17. In this case, the data obtained from the gas detector is sent to the control unit 14, and the control unit 14 determines whether or not the concentration of the odorous gas is within a range of a control value. When a value beyond the range of the control value is detected by the gas detector, the alarm 6 is operated by the PCL 8.
With this arrangement, even if undesirable odorous gas or the like leaks, the exposure of odorous gas to workers can be prevented because the alarm 6 is operated in a state in which the gas is retained in the housing 18.

### 2. Control Procedure of Plastic Lens Manufacturing Device

### (1) Flow Chart of Preparation Step

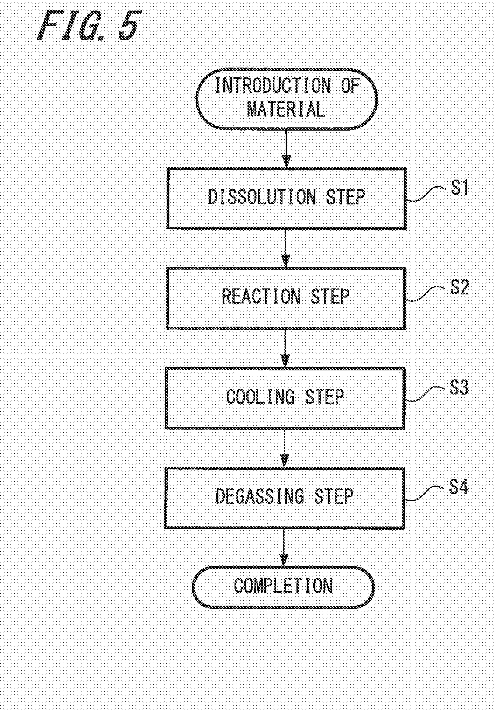

Referring to Fig. 5, operations of the plastic lens manufacturing device 100 according to the present embodiment and control procedures thereof will be explained. In the following embodiment, a case where a material for a high refractive index lens is prepared is shown, A lens raw material containing, for example, an episulfide compound and a sulfur atom-containing inorganic compound such as sulfur are mixed and the mixture is reacted to obtain a high refractive index plastic lens material. The present invention, however, is not limited thereto, and is applicable to preparation steps of various other plastic lens raw materials.
First, before the preparation step is started, the second suction unit 17 is operated, and a pressure of atmosphere in the housing 18 is set to be lower than that of the ambient air. It is preferable that this decompressed state of the housing 18 is maintained until the preparation step is completely taken.
The lens raw material is introduced when the housing 18 is in an appropriately decompressed state.
In a dissolution step, the lens raw material and the sulfur introduced into the preparation tank 1 are dissolved by heat (Step S1). In a reaction step, the lens raw material is caused to react with the sulfur (Step S2).

Next, in a cooling step, the lens material is cooled after the reaction step has been taken (Step S3). Then, after the cooling step has been taken, a degassing treatment is finally performed in a degassing step (Step S4). Here, in the cooling step and the degassing step, the pressure in the preparation tank 1 is reduced by the first suction unit 7, and the generated undesirable gas such as hydrogen sulfide or the like in this case is removed.
The suctioned gas such as hydrogen sulfide or the like is sent to the purifying tank 10 and subjected to purification, and then exhausted through the exhaust unit 11. Because the generated undesirable gas is directly purified, the odor specific to the preparation of the lens material step can be destroyed, and the leakage thereof to the outside can be avoided.
The preparation of the 1 ens material is completed when the degassing treatment is performed. The process proceeds to, for example, a step of filtering the prepared lens material and then a step an which the material is injected into a lens mold and cured with heat although those steps are not described here. Then, the resulting product is released from the lens mold and a thermosetting plastic lens is produced.

It should be noted that when the plastic lens is processed to be an optical product, a cured film, an antireflective film, and the like are appropriately disposed on the molded lens. For example, when the plastic lens is applied to a spectacle lens, after the lens is molded, for example, a primer layer is formed on the lens to produce impact resistance if necessary. Further, a cured film, an antireflective film, a water-repellent film, and the like are appropriately formed.

### (2) Flow Chart of Control Procedure

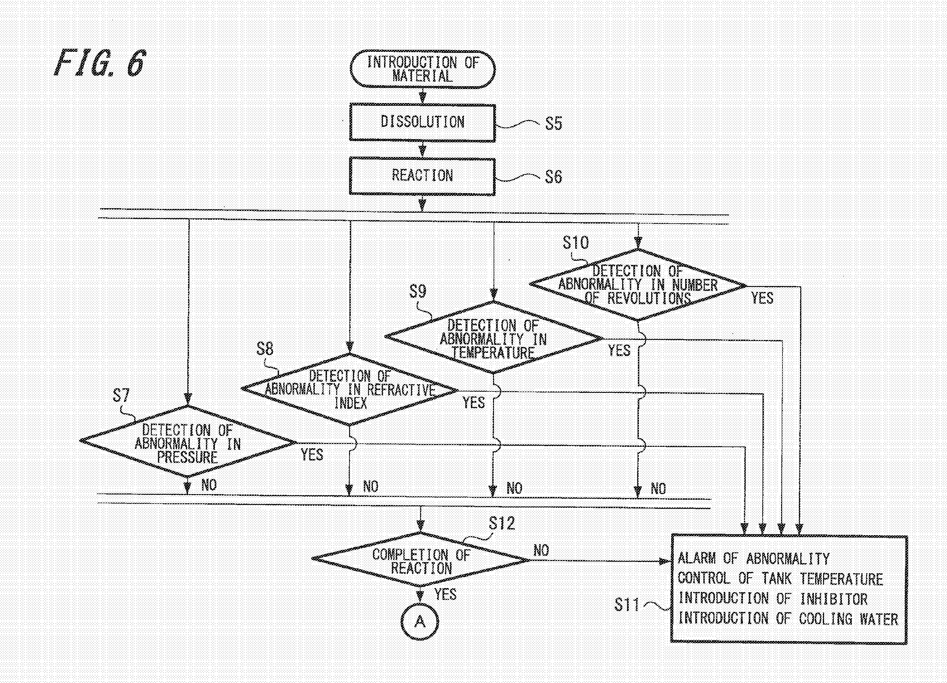

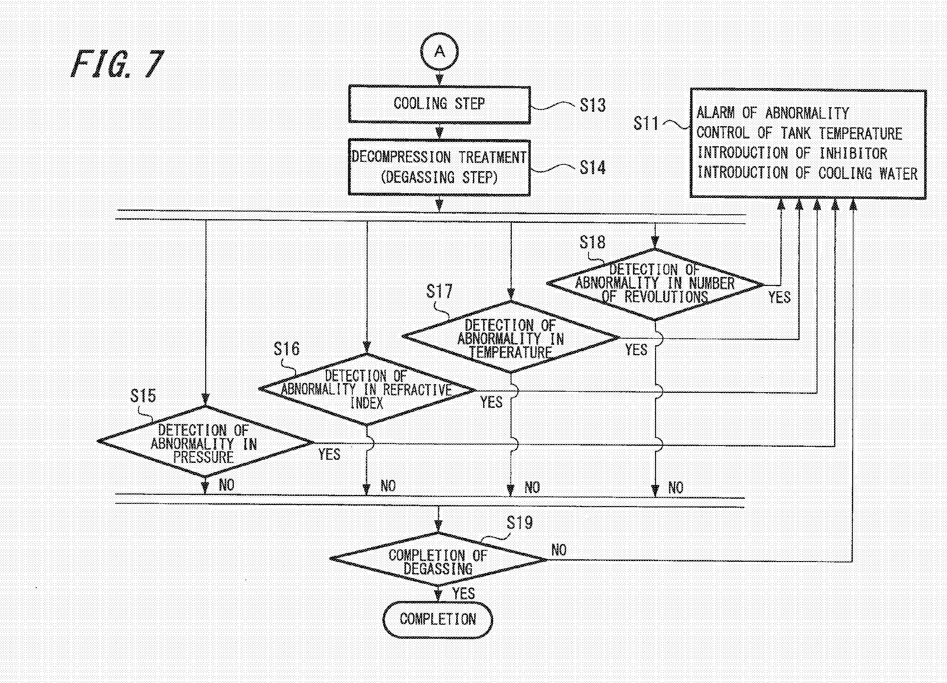

Operations of the plastic lens manufacturing device 100 and control procedures thereof according to the present embodiment will be explained referring to flow charts in Figs. 6 and 7 as a typical example which shows a series of steps starting from the dissolution step to the degassing step. In this example, a material for a high refractive index lens is also prepared. The present invention, however, is not limited thereto, and it can be applicable to a preparation step for other various plastic lens raw materials.
Here, the operations and the control procedures in the reaction step and the degassing step will be particularly explained, but in the dissolution step and the cooling step, the same logic as that established in the reaction and degassing steps is established and the program is changed appropriately depending on a type of the material.

### a,Flow Chart of Reaction Step

Fig. 6 is a flow chart showing one example of operations and control procedures performed in the dissolution step through the reaction step, particularly in the reaction step taken in the plastic lens manufacturing device 100 according to the present embodiment.
In the dissolution step, when the lens raw material and sulfur are introduced into the preparation tank 1 and the mixture thereof is heated, sulfur is first dissolved in the lens raw material (Step S5). Then, the process proceeds to the reaction step where a catalyst is introduced thereto, to cause the lens raw material to react with sulfur (Step S6).

When the inside of the preparation tank 1 is maintained at a high temperature due to a continued application of heat and the lens raw material excessively reacts with sulfur, the lens raw material may turn into a gel and may not be formed into a resin. Further there is a possibility of the material being turned into black.
If the lens raw material is turned into black, odor or heat may be generated which may adversely affect a work environment for workers.

In the reaction step, it is preferable to monitor the pressure, the refractive index, the temperature and the number of revolutions. Data on the refractive index and the number of revolutions of the lens material in the preparation tank 1, which are obtained from the refractometer 2 and the revolution indicator 3, are sent to the control unit 14.
Similarly, data on the temperature and the gas pressure in the preparat ion tank 1, which are obtained from the thermometer 4 and the pressure gauge 5, are also sent to the control unit 14. Then, in the control unit 14, whether or not the measured values of the pressure, the refractive index, the temperature, and the number of revolutions are within the ranges of the pro-determined control values, is determined (Steps S7 to S10).

Although these determination may be made in series according to a predetermined order, they may be also made in parallel as shown in Fig 6. For example, when the measured temperature is beyond the range of the control value, the control unit 14 outputs an abnormal signal to the PCL 8. The PCL 8 having received the abnormal signal outputs operation signals to arbitrary sections of the alarm 6, the temperature regulation unit 16, the inhibitor introduction unit 12a and the cooling water introduction unit 12b. As an example thereof, the alarm 6 is sounded, and at the same time, the reaction inhibitor is introduced into the preparation tank 1 from the inhibitor introduction unit 12a, thereby inhibiting the proceeding of the abnormal reaction. Further, the cooling water is sent around the preparation tank 1 from the temperature regulation unit 16, thereby cooling the inside of the preparation tank 1 (Step S11). The cooling water may be introduced into the inside of the preparation tank 1 through the cooling water introduction unit 12b depending on a type of the lens raw material, but the cooling water is not introduced if the introduction of the cooling water is not appropriate.

Similarly, it may be arranged such that the control unit 14 outputs the abnormal signal to the PCL 8, and the PCL 8 operates the arbitrary sections of the alarm 6, the inhibitor introduction unit 12a, the temperature regulation unit 16, and the cooling water introduction unit 12b when any one of the values of the pressure, the refractive index and the number of revolutions exceeds the range of control value. In particular, when the value of the pressure is beyond the control value, the PCL 8 may operate the first suction unit 7 to reduce the pressure in the preparation tank 1.
At this time, information on, for example, the values exceeding the ranges of control values, and the related data and time may be displayed on the display unit 13. Further, when any one of the values of the pressure, the refractive index and the number of revolutions is beyond the range of the control value, a countdown may be displayed, and when there is no response such as an operation performed by workers in a predetermined period of time, the arbitrary sections of the alarm 6, the inhibitor introduction unit 12a, the temperature regulation unit 16 and the cooling water introduction unit 12b may be operated.

Then, when all of the values of the pressure, the refractive index, the temperature and the number of revolutions are within the ranges of the control values (No in Steps S7 to S10), no action is taken until the refractive index reaches a predetermined value. Once the refractive index reaches the predetermined value, whether or not the values of the dissolution temperature, the pressure, the number of revolutions and the elapsed time are within the ranges of the control values is determined (Step S12). When all of the values are within the control values and the dissolution step and the reaction step have been taken, the procedure proceeds to the next cooling step (Yes in Step S12). If the dissolution step or the reaction step has not been taken, the PCL 8 determines that abnormality has occurred, and the PCL 8 having received the abnormal signal operates the alarm, and countermeasures such as cooling of the preparation tank 1 and introduction of the reaction inhibitor, and introduction of cooling water depending on the type of the lens raw material are taken. As a result, the lens material is promptly processed.

As described above, according to the present embodiment, when any one of data monitored exceeds the control value in each step, the PCL 8 having received an abnormal signal operates the alarm, and countermeasures such as cooling of the preparation tank 1 or introduction of the reaction inhibitor are taken. Thus, abnormality occurs in the preparation tank 1 can securely be detected. In addition, because initial countermeasures against the abnormality are taken even if no operation is performed by workers, problems can quickly be handled and a burden on workers can be reduced.
Although the method for monitoring conditions of the preparation in the reaction step has been described here, the same logic is established in the dissolution step. Thus, the abnormal preparation occurs in the dissolution step can be monitored.

### b. Flow Chart of Degassing Step

Fig. 7 is a flow chart showing a flow starting from the cooling step to the degassing step. Here, the operations and controlling methods to be performed/employed in the degassing step will be particularly described.
After the reaction step has been taken, the preparation tank 1, whose temperature has been raised in the reaction step, is cooled by circulating the cooling water, supplied from the temperature regulation unit 16, around the preparation tank 1 (Step S13). After the cooling step has been taken, additives are introduced, and the process proceeds to a decompression treatment (steep S14).
According to the plastic lens manufacturing device 100 of the present embodiment, the pressure, the refractive index, the temperature in the preparation tank 1 and the number of revolutions of the stirrer 15 are monitored when the decompression treatment is performed.
That is, the data obtained from the refractometer 2, the revolution indicator 3, the thermometer 4, and the pressure gauge 5 are sent to the control unit 14, and whether or not the measured values are within the ranges of the pre-determined control values is determined (Steps S15 to S18). When any one of the values of the refractive index, the temperature, the pressure and the number of revolutions exceeds the ranges of the control values, the occurrence of the abnormality is detected (YES in Steps S15 to S18), and an abnormal signal is outputted to the PCL 8.

Then, the PCL 8 having received the abnormal signal outputs a operation signal to arbitrary sections of the alarm 6, the cooling water introduction unit 12b, the inhibitor introduction unit 12a and the temperature regulation unit 16, causes the alarm 6 to sound an alarm, and, for example, causes the inhibitor introduction unit 12a to introduce the reaction inhibitor to the preparation tank 1. The temperature regulation unit 16 sends the cooling water around the preparation tank 1 to cool the preparation tank 1 (Step S11). Further, in this step, the cooling water may also be introduced into the preparation tank 1 through the cooling water introduction unit 12b depending on the type of the lens raw material.

When the refractive index reaches the pre-determined value, whether or not the degassing step has normally been taken is determined (Step S19). Here, whether or not all of the values of the temperature, the pressure, and the number of revolutions are within the ranges of the control values is determined again. When all of the values are within the control values and the degassing step has normally been taken, the process proceeds to the next step (Yes in Step S19). When any one of the values exceeds the control value, the PLC 8 recognizes that abnormality has occurred, and the PLC 8 having received an abnormal signal operates the alarm, and countermeasures such as cooling the preparation tank 1, introduction of the reaction inhibitor, and introduction of cooling water depending on the type of the lens material are taken (NO in Step S19). As a result, the lens material is rapidly processed and a possibility that an abnormal reaction proceeds further can securely be eliminated.

Although descriptions are omitted, it is preferable that that the refractive index, the number of revolutions, the temperature and the pressure are measured and conditions of the preparation are monitored also in the cooling step in accordance with the same logic as that described above. When the preparation is performed while the gas generated in the dissolution step S1 is exhausted by the first suction unit 7, the monitoring of the pressure in the preparation tank 1 may be omitted if necessary. However, it is preferable that the pressure is measured and monitored in the degassing step in order to control the degree of the degassing.
Further, the refractive index, the number of revolutions, the temperature and the pressure many be monitored not only in the steps described in the present embodiment but also in other steps such as a polymerization step in which a monomer is introduced into the lens material after the dissolution step S1 is taken and then the polymerization is performed. Further, it may not necessary to measure all of the four factors (i.e. the refractive index, number of revolutions, temperature, and pressure), and necessary data on the factors may selectively be monitored depending on the step. It is most preferable however that the measurement is always performed wi th time. It may be further preferable to control the values in each step with time.
Moreover, possible changes in conditions of the preparation may be predicted based on the data obtained with time, and the values in each step may be determined and controlled in accordance with a lapse of time.

According to the embodiment described above, the preparation tank 1, the refractometer 2, the revolution indicator 3, the thermometer 4 and the pressure gauge 5 are covered by the housing 18, and the second suction unit 17 is connected to the housing 18.

As described above, according to the present invention, abnormality occurs in the preparation of the lens material can securely be detected, and countermeasures for inhibiting the proceeding of the abnormal reaction can quickly be taken. Thus, the further proceeding of the abnormal reaction can be prevented, and the safety of workers can be assured.
Further, the diffusion of undesirable gases such as odorous gases generated at the time of the preparation of the lens material can be inhibited. Hence, workers can work without being exposed to odor resulting in the reduction of a workload for workers.
It should be noted that the present invention is not limited to the embodiments described above, and can be applied to various steps in the preparation of the plastic lens material. Obviously, changes and modifications may be made within the scope of the present invention.

### Explanation of Numerals

1: preparation tank, 2: refractometer, 3: revolution indicator, 4: thermometer, 5: pressure gauge, 6: alarm, 7: first suction unit, 8: PLC, 9: buffer tank 10: purifying tank, 11: exhaust unit 12a: inhibitor introduction unit 12b: cooling water introduction unit, 13: display unit, 14: control unit, 15: stirrer, 16: temperature regulation unit 17: second suction unit, 18: housing, 19: housing , 20: window, 20a: door, 21: insertion hole , 22: glove

## Claims

1. A plastic lens manufacturing device comprising:
a preparation tank in which a lens material is prepared; a suction unit which exhausts a gas in the preparation tank; a thermometer which measures a temperature of the lens material that is prepared;
a revolution indicator which measures a number of revolutions of a stirrer for stirring the lens material when the lens material is prepared;
a control uni t which determines an occurrence of abnormality in a state of the preparation of the lens material based on data obtained from the thermometer and the revolution indicator;
a temperature regulation unit which regulates a temperature inside the preparation tank;
an inhibitor introduction unit which introduces a reaction inhibitor into the preparation tank; and
a programmable logic controller which is connected to the control unit and controls operations of the temperature regulation unit and the inhibitor introduction unit based on determination made by the control unit.

2. The plastic lens manufacturing device according to claim 1, further comprising:
a housing which hermetically covers at least a periphery of the preparation tank; and
a second suction unit which suctions an atmosphere inside the housing for exhausting the suctioned atmosphere.

3. The plastic lens manufacturing device according to claim 1 or 2, further comprising a refractometer which measures a refractive index of the lens material that is prepared, wherein the control unit uses data obtained from the refractometer as data for determining the occurrence of abnormality in the state of the preparation of the lens material.

4. The plastic lens manufacturing device according to any of claims 1 to 3, further comprising a pressure gauge which measures a pressure in the preparation tank when the lens material is prepared, wherein the control unit uses data obtained from the pressure gauge as data for determining the occurrence of abnormality in the state of the preparation of the lens material.

5. The plastic lens manufacturing device according to any of claims 1 to 4, wherein the control unit determines whether or not data for determining the occurrence of abnormality in the state of the preparation of the lens material are within predetermined control values at least in a predetermined step in accordance with a lapse of a preparation time of the lens material.

6. The plastic lens manufacturing device according to claim 5, wherein the control values are set with time in a step corresponding to the lapse of the preparation time of the lens material.

7. The plastic lens manufacturing device according to claim 5 or 6, wherein the control unit outputs an abnormal signal to the programmable logic controller when at least one of data indicates a value that exceeds a range of the control values.
